# EUROPEAN PATENT SPECIFICATION

(11) **EP 1 368 913 B1**
(45) Date of publication and mention of the grant of the patent: **30.12.2009**
(21) Application number: 02702409.0
(22) Date of filing: 13.03.2002
(51) Int. Cl.: H04B 10/18, H04Q 11/00

(54) **OPTICAL DATA COMPRESSION DEVICE AND METHOD**
VERFAHREN UND VORRICHTUNG ZUR OPTISCHEN DATENKOMPRESSION
DISPOSITIF ET PROCEDE DE COMPRESSION DE DONNEES OPTIQUES

(30) Priority: 16.03.2001 GB 0106551; 26.02.2002 GB 0204459
(43) Date of publication of application: 10.12.2003
(73) Proprietor: ROKE MANOR RESEARCH LIMITED, Romsey, Hampshire SO51 0ZN (GB)
(72) Inventor: MANSBRIDGE, John, Stockbridge, Hampshire SO20 6BQ (GB)
(74) Representative: Payne, Janice Julia
(86) International application number: PCT/EP2002/002790
(87) International publication number: WO 2002/075980

(56) References cited:
- EP-A- 0 922 992
- WO-A-01/10165
- GB-A- 2 269 953
- US-A- 4 928 316
- US-A- 5 926 297
- PATENT ABSTRACTS OF JAPAN vol. 1995, no. 08, 29 September 1995 (1995-09-29) & JP 07 123073 A (NIPPON TELEGR & TELEPH CORP), 12 May 1995 (1995-05-12)

## Description

This invention relates to a data compression device and method, in particular for use in optical systems.

Features of an optical TDM switch core are described in WO01/10165 and WO01/86768. These applications relate to a system whereby a chirped pulse is modulated with data, compressed into a short pulse and then time multiplexed onto a single optical fibre. Individual compressed pulses are then selected and decompressed at each of the exit ports of the system. The chirped pulse is derived from a central source and is distributed to the various data modulators via an optical fibre.

The main advantage of using centrally generated pulses is that they are synchronised by virtue of originating in the same source and simply require an appropriate delay to be set in a path between the source and the multiplexer to ensure that the timing of the compressed data pulses, as they are multiplexed onto the TDM optical fibre, is correct. If this inherent synchronisation were to be lost, the pulses would lose their timeslots in a multiplexed stream, giving rise to data errors.

However, the disadvantage of this approach is that each modulated, compressed pulse must occupy a timeslot on the optical fibre that is determined by the delay set in the path between the source and the multiplexer. In order to change this delay sufficiently (a few nanoseconds), and therefore the timeslot, the path must be changed in length and this currently requires a mechanical system to change the path length. Such mechanical systems have the disadvantages of being large, heavy, unreliable and very slow to operate. It should be noted that there are a number of electro-optic devices that are capable of implementing a variable optical delay, but these do not have sufficient capability to replace mechanical systems.

Since each pulse usually carriers data from a given data source, this approach means that unless the time delay is variable, each data source in an equipment has a fixed timeslot allocated to it when it is connected to the TDM optical fibre.

There are a range of applications where it would be useful to be able to allocate and reallocate the timeslot associated with a given data source without having to change the optical path length using a mechanical device. For example, if the timeslot allocated to a particular data source could be changed in a convenient and fast operating fashion then it would be possible, for example, to connect to the TDM fibre more data sources than there are TDM slots, but to operate the sources such that each has its own TDM slot. Using this approach the data sources could be turned on or off according to the demand.

Alternatively, a data stream could be connected to the optical switch core by two or more alternative paths. On the TDM fibre one of the paths would be connected to an active device transmitting onto the TDM fibre, whilst the other device or devices connected to the alternative path or paths would be inactive and therefore not occupying a timeslot on the TDM fibre. If the path connected to the active device were to fail the active device would be turned off and one of the devices connected to an alternative path would be activated and would use the time slot vacated by the transmitter that had just been turned-off. In this way, the redundant connections to the optical switch core are achieved without requiring an increase in the capacity of the TDM fibre, which would be required if all the devices had to have a timeslot allocated.

In accordance with a first aspect of the present invention, an optical system comprises a data compression device, wherein the device comprises at least two pulse generating devices; a delay element, modulating means and pulse compression element associated with each pulse generating device; and control means; whereby each modulated, compressed, pulse is multiplexed onto an optical fibre; and whereby the control means monitors each compressed pulse and applies an appropriate delay via the respective delay element such that the frequency of each laser is increased or decreased as necessary to control the position of each pulse in the multiplexed pulse stream.

In accordance with a second aspect of the present invention, a method of data compression in an optical system comprises generating pulses from at least two pulse generating devices, each pulse generating device having an associated delay element, modulating means and pulse compression element; modulating digital data onto each pulse in respective modulating means; compressing the modulated pulse in the respective pulse compression element; and coupling the data modulated pulses to an optical fibre under the control of the control means; monitoring each compressed pulse and applying an appropriate delay to each pulse from the respective delay element, such that the frequency of each laser is increased or decreased as necessary to control the position of each pulse in the multiplexed pulse stream.

The system and method of the present invention overcome the problems of synchronisation of locally generated pulses by providing a delay element for each pulse source and controlling these centrally.

Preferably, the control means allocates a time slot to each modulated pulse to provide synchronisation for multiplexing the modulated pulses onto the optical fibre.

Alternatively, the control means operates a collision protocol to multiplex the modulated pulses asynchronously onto the optical fibre.

The pulse generating device may comprise a pulsed chirped laser, such as a mode locked fibre laser and a high dispersion element; or a mode locked semiconductor laser and a dispersion element, but preferably the pulse generating device comprises a pulsed laser and a decompressor.

Preferably, the modulating means and pulse compression element comprise a spatially dispersive element for generating a plurality of spatially distributed outputs from the input laser pulse; modulating means to modulate digital data onto each output and an inverted spatially dispersive element to recombine the data modulated outputs.

Preferably, the modulating means comprises one of electro-optic Mach-Zehnder modulators, electro-absorption modulators and modulated silicon optical amplifiers.

An example of a data compression device and method in accordance with the present invention will now be described with reference to the accompanying drawings in which:-
Figure 1 shows an example of prior art data compression apparatus;
Figure 2 illustrates a first data compression device according to the present invention;
Figure 3 illustrates a second data compression device according to the present invention;
Figure 4 is an implementation of the device of Fig. 3;
Figure 5 shows in more detail, the implementation of Fig. 4;
Figure 6 illustrates application of a delay to the device of Fig. 2; and,
Figure 7 shows an example of the device of Fig. 2 in which a collision protocol is used.

Conventionally, a chirped pulsed laser is used to generate a pulse of light long enough to carry many bits on a single pulse. Pulses from a single source are applied in sequence to a plurality of modulators that modulate the pulses with data. Each modulated pulse is then compressed into a short time period to enable it to be time multiplexed onto an optical backplane. At the outputs, individual compressed pulses are selected and decompressed.

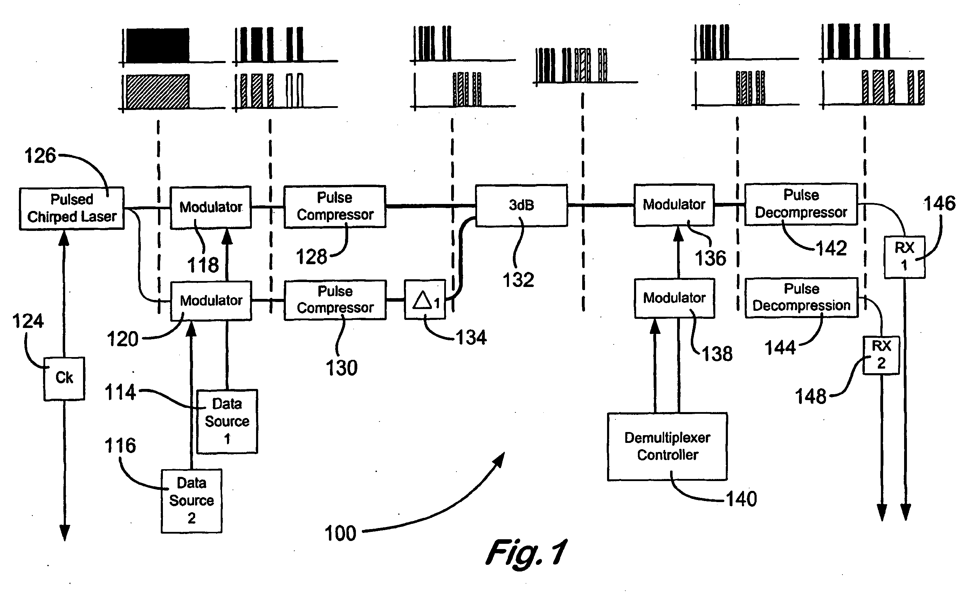

Fig. 1 illustrates an example of a conventional data compression apparatus. A pulsed chirped laser 126 inputs chirped optical pulses to a first modulator 118 and a second modulator 120. Data from a first data source 114 is modulated onto the chirped optical pulse by the first modulator 118, is compressed in a pulse compressor 128 and multiplexed onto an optical fibre via a 3dB coupler 132. Data from a second data source 116 is modulated onto the chirped optical pulse by the second modulator 120, is compressed in a pulse compressor 130, then passed through a delay element 134 before being coupled to the optical fibre. Typically, the data modulated onto the chirped pulses is at 10Gb/s. After transmission, the pulses are demultiplexed under the control of a demultiplexer controller 140, demultiplexed by modulators 136, 138 and decompressed in pulse decompressors 142, 144. For a system with 128, 10G data sources (rather than the 2 illustrated), the links between the compression and decompression stages are optical links operating at 1.28 Tb/s. The receivers 146 and 148 output the data to the output port of a switch. The shape of each pulse as it passes through the system is indicated above the block diagram showing how the initial pulses are first modulated, then one is delayed, both are multiplexed onto a fibre, then demodulated and decompressed. In a system having two modulators as shown in Fig. 1, a delay may be applied to one of the compressed pulses by the delay element 134 to adjust the relative timing of the pulses. The delay element 134 is used to set the correct delay in the fibre path from the pulsed chirped laser 126 to the multiplexer 132 so that the two (in this example) pulses are in separate timeslots. The delay element 134 could be a length of fibre cut to the appropriate length or it could be a mechanical device that is capable of changing its optical path length. In general, to make the design of the system homogeneous, all of the pulse compressors will have a delay element associated with them.

Using this approach it is possible to multiplex very large amounts of data (typically terabits per second) onto a single fibre optic cable. The timing of the compressed data pulses is set by the delay applied by the delay element 134. Any change to the phase of the pulses at the laser source 126 will apply in common to all the compressed pulses, so a phase change will not cause a pulse to miss its time slot in the multiplexed stream of pulses on the optical fibre.

However, when chirped pulses are generated locally for each modulator, rather than using a single source, this does not apply. The timing of the pulses must be controlled to multiplex the pulses onto the optical fibre in order. Also, in these circumstances, it is possible that a phase change will occur in one source, but not in others, giving rise to additional problems with timing of the compressed pulses as they are multiplexed onto the fibre.

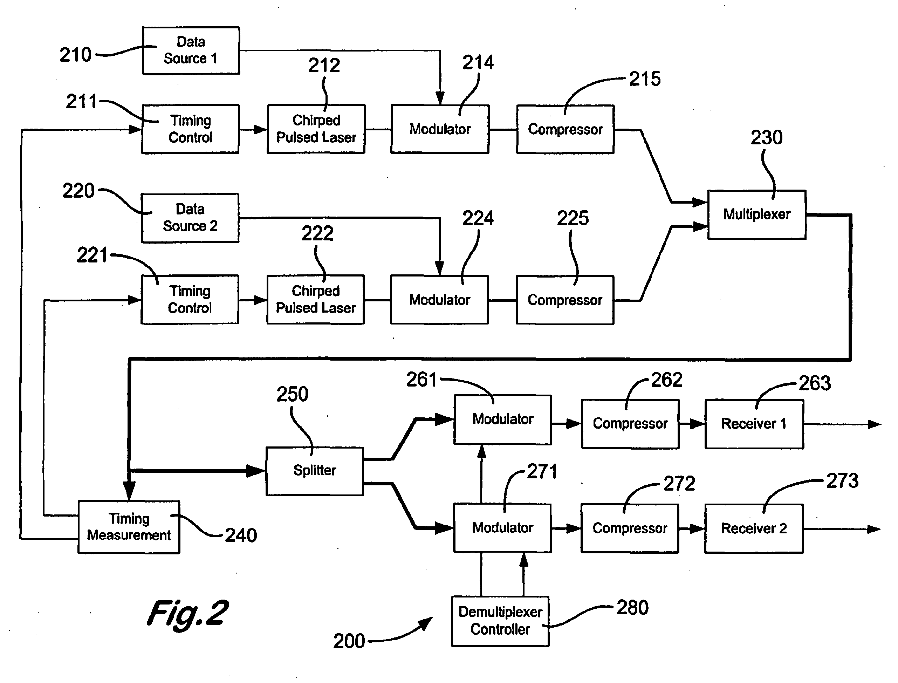

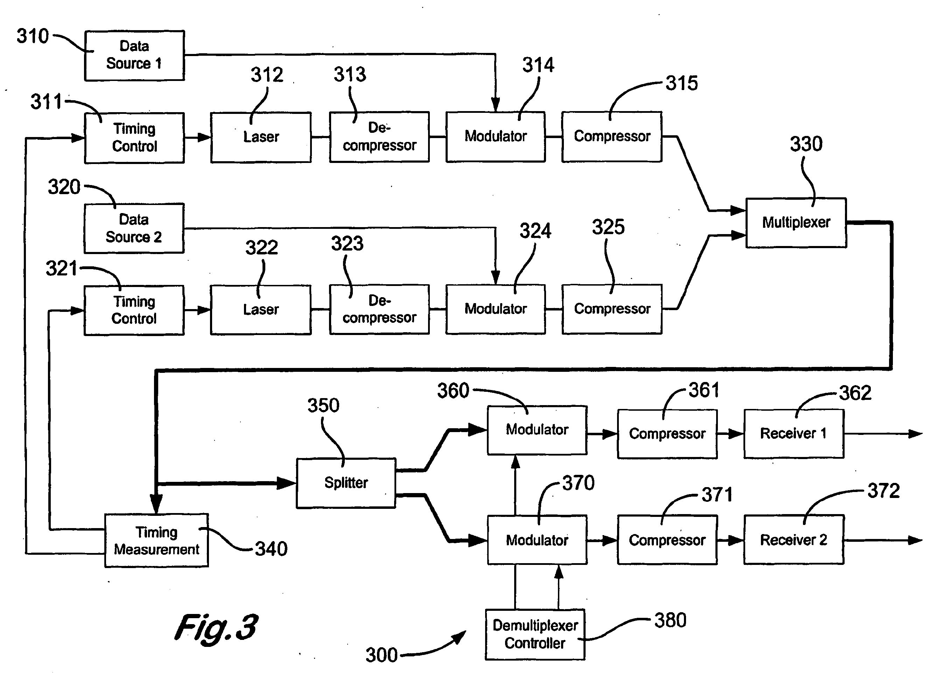

Two implementations of a data compression device according to the present invention are illustrated in Fig. 2 and Fig. 3.

In Fig.2 a pulsed chirped laser is used in a first embodiment of the data compression device 200. For each modulator/pulse compressor pair 214, 215; 224, 225 a pulsed laser 212,222 is provided. A chirped pulse from each laser is input to the respective modulators 214, 224 and the modulated pulse is recompressed in the respective compressor 215, 225. The recompressed pulse is multiplexed onto a fibre in multiplexer 230. A controller 240 monitors the recompressed pulses from each laser and applies an appropriate delay via respective delay elements 211, 321. The transmitted signal is input to a splitter 250 and individual pulses are separated off by modulators 261, 271 under control of a demultiplexer controller 280, then decompressed in compressors 262, 272 and received in receivers 263, 273.

Fig. 3 illustrates a more general implementation of the data compression approach. The chirped pulsed laser 212, 222 of Fig. 2 can be viewed as a pulsed laser and a decompressor that converts a very short pulse into a longer pulse with a chirp on it. In Fig. 3 this becomes laser/pulse decompressor pairs 312, 313; 322, 323.

For each modulator/pulse compressor pair 314, 315; 324, 325 a pulsed laser 312, 322 is provided. A pulse from each laser is applied to decompressors 313 and 323 that decompress the pulses prior to modulation. A decompressed pulse from each laser is input to the respective modulator 314, 324 and the modulated pulse is recompressed in the respective compressor 315, 325. A controller 340 monitors the recompressed pulses from each laser and applies an appropriate delay via respective delay elements 311,321.

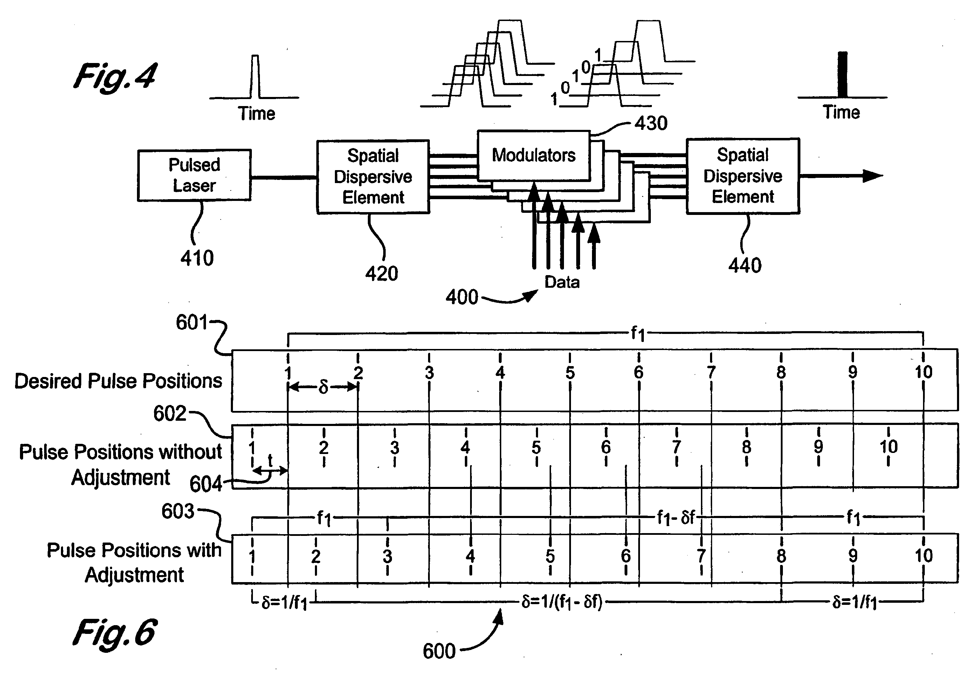

In the implementation illustrated in Fig. 3 the compression need not be in the time domain it can be in the spatial domain. The decompressors 313, 323 now split the optical pulses into a number of wavelengths that follow spatially separate paths. A system that implements this approach is illustrated in Fig. 4 for one of the data paths, equivalent to items 312, 313, 314 and 315 for example in Fig. 3.

A pulsed laser 410 produces short pulses with a wide spectral bandwidth. A spatial dispersive element 420 that is the equivalent of a decompressor 313 or 323 in Fig. 3 is used to split the pulse into a number of wavelength that travel separate spatial paths to a set of modulators 430. The modulators 430 modulate the wavelengths with data and the spatial dispersive element 440 that is the equivalent of the compressors 315 and 325 is used to recompress the laser pulse.

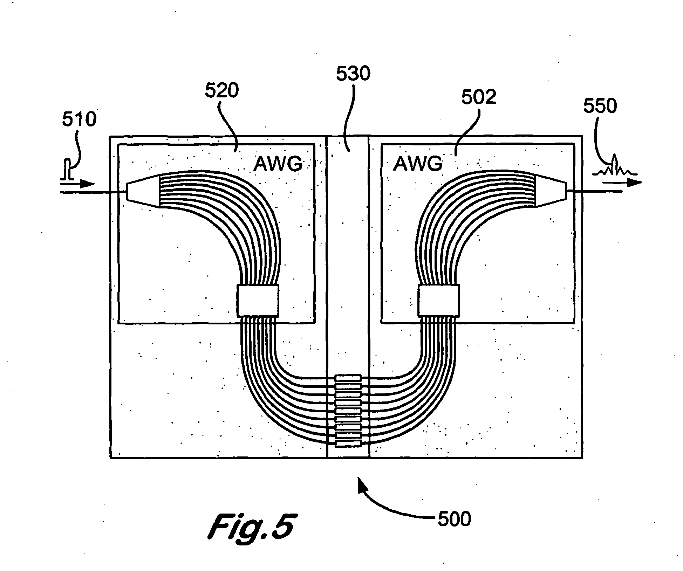

A more detailed implementation of this system is illustrated in Fig. 5. This shows the system described in Fig. 4 implemented on an integrated optic device. The short pulse 510 is decompressed by an arrayed waveguide grating (AWG) 520. The data is modulated by modulators 530 and recompressed by another AWG 540 to form a recompressed pulse 550.

The decompressor elements in Fig. 3, 361 and 371, can similarly be implemented in the temporal or spatial domains. If this is carried out in the spatial domain similar technology to 520 can be used.

The delay of the laser pulses is most conveniently implemented by adjusting the pulsing frequency of the pulsed laser. If the pulse is too early and therefore needs to be delayed, the frequency of the laser pulses can be reduced. This will cause the time between each pulse to increase and for each pulse to be relatively later than the previous one. This is illustrated in Fig. 6.

Block 601 shows a group of ten pulses that are at a required repetition frequency and have the desired delay. Block 602 shows another set of pulses that are at the correct frequency, f₁, but are occurring too early by a time, Δt 604. In order to correct the delay in the pulses shown in block 602, the frequency is reduced at pulse 3 to f₁ - δf. It can be seen that from pulse 3 to pulse 8 the pulse is moving to the desired position. At pulse 8 the pulses have the required delay and the frequency can be returned to f₁.

Thus the effective delay for each of the pulses can be set by looking at the position of the pulse in the multiplexed pulse stream and instructing the pulsed laser to increase or decrease its frequency as required to make the pulse position correct. In this type of system it is usually inconvenient for every laser to attempt to pulse at the same required repetition rate by accurate control of its own frequency alone.
Therefore, it is normal to compare the repetition rate of each laser to a master oscillator and to control its frequency relative to the master oscillator. In this case the phase of the pulses is being controlled as well as the long-term frequency of the laser.

The frequency of this type of laser can be adjusted by a number of known means. If the laser is mode-locked, changing the laser cavity length by a small amount by mechanically lengthening it or by modulating the refractive index of part of the cavity will change the frequency. If the laser pulse is initiated by driving the laser or a component within it by an electrical signal, the electrical signal can be controlled to effect the required change in frequency.

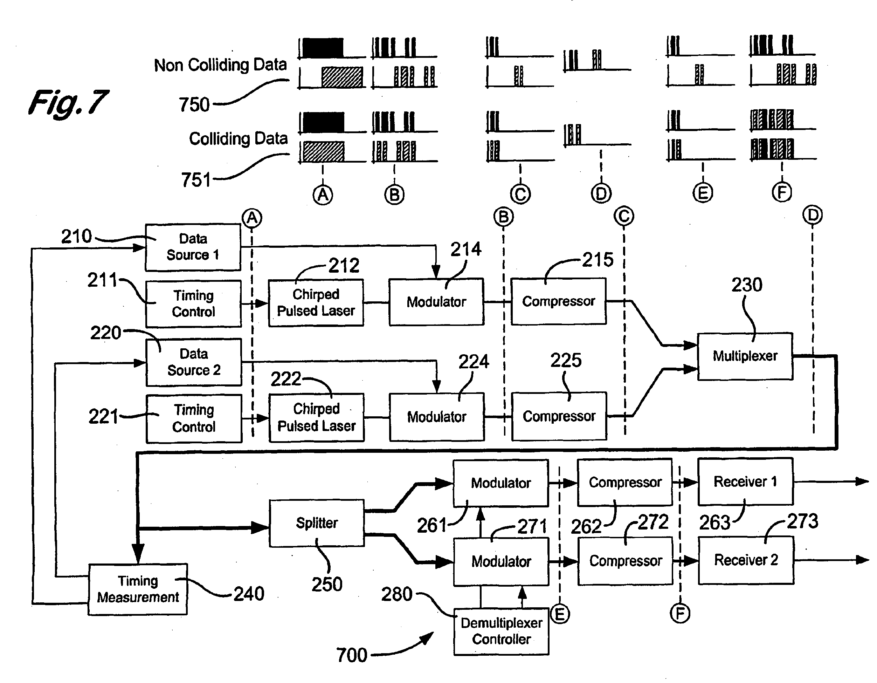

Fig. 7 shows an embodiment where a collision protocol is used instead of a scheduled TDM bus. Where the same components are present as in the system of Fig. 2, the same reference numbers are used. The illustrations of the pulses in this case show a higher degree of compression. Hence the compressed pulses are illustrated as being much shorter in time in this figure than in Fig. 1. Each transmitter multiplexes a compressed data pulse onto the TDM fibre in a random timeslot. An individual pulse is then picked off by the modulators 261 and 271 and decompressed. If the pulses do not collide as shown in block 750 the pulses can be separated by the modulators 261 and 271 and decompressed 262, 272 and received 263, 273. However, if two transmitters transmit in the same timeslot as illustrated in block 751, it will not be possible for the modulators 261 or 271 to separate the pulses and if one of them tries to pick off overlapping pulses the pulses will both be decompressed and will overlap when decompressed thus corrupting the data in both pulses.

In a collision protocol one of the transmitters would be told to stop transmitting on that timeslot and would then need to wait until a random period has elapsed or until instructed that the timeslot is free or seek another timeslot that is not occupied. This can be carried out without the need for the pulses to be in defined timeslots.

Clearly the use of this approach means that the available TDM slots will be filled less efficiently and the data will suffer random delays, associated with waiting for a free slot to be found. However, the advantage of this approach is that a lot of transmitters can be connected to the TDM fibre and if they only transmit sporadically then it will look as if each transmitter has a large transmission capacity when it is transmitting. The use of compressed pulses reduces the probability of collisions between pulses making it possible for many transmitters to transmit at the same time.

## Claims

1. An optical system comprising a data compression device (200), wherein the device comprises at least two pulse generating devices (212, 222); a delay element (211, 221), modulating means (214, 224) and a pulse compression element (215, 225) associated with each pulse generating device; and control means (240); whereby each modulated, compressed, pulse is multiplexed (230) onto an optical fibre; and **characterised in that** the control means is adapted to monitor each compressed pulse and apply an appropriate delay via the respective delay element (211, 221) such that the frequency of each laser (212, 222) is increased or decreased as necessary to control the position of each pulse in the multiplexed pulse stream.

2. A system according to claim 1, wherein the control means (240) allocates a time slot to each modulated pulse to provide synchronisation for multiplexing the modulated pulses onto the optical fibre.

3. A system according to claim 1, wherein the control means (240) operates a collision protocol to multiplex the modulated pulses asynchronously onto the optical fibre.

4. A system according to any preceding claim, wherein the pulse generating device (212, 222) comprises a pulse chirped laser.

5. A system according to claim 4, wherein the pulse chirped laser (212, 222) comprises one of a mode locked fibre laser and a high dispersion element; or a mode locked semiconductor laser and a dispersion element.

6. A system according to any of claims 1 to 3, wherein the pulse generating device comprises a pulsed laser and a decompressor.

7. A system according to claim 6, wherein the modulating means (214, 224) and pulse compression element (215, 225) comprise a spatially dispersive element (420) for generating a plurality of spatially distributed outputs from the input laser pulse; modulating means (430) to modulate digital data onto each output and an inverted spatially dispersive element (440) to recombine the data modulated outputs.

8. A system according to any preceding claim, wherein the modulating means (214, 224) comprises one of electro-optic Mach-Zehnder modulators, electro-absorption modulators and modulated silicon optical amplifiers.

9. A method of data compression in an optical system, the method comprising generating pulses from at least two pulse generating devices (212, 222), each pulse generating device having an associated delay element (211, 221), modulating means (214, 224) and pulse compression element (215, 225); modulating digital data onto each pulse in respective modulating means; compressing the modulated pulse in the respective pulse compression element; and coupling the data modulated pulses to an optical fibre under the control of the control means (240); **characterised in that** the method further comprises monitoring each compressed pulse and applying an appropriate delay to each pulse from the respective delay element (211, 221), such that the frequency of each laser (212, 222) is increased or decreased as necessary to control the position of each pulse in the multiplexed pulse stream.

10. A method according to claim 9, wherein the pulse is a chirped pulse.

## Patentansprüche

1. Optisches System, das eine Datenkompressionsvorrichtung (200) umfasst, wobei die Vorrichtung Folgendes umfasst: mindestens zwei impulserzeugende Vorrichtungen (212, 222), ein Verzögerungselement (211, 221), Moduliermittel (214, 224) und ein zugehöriges Impulskompressionselement (215, 225) für jede der impulserzeugenden Vorrichtungen und ein Steuermittel (240), wobei jeder modulierte komprimierte Impuls auf eine optische Faser multiplexiert (230) wird, und **dadurch gekennzeichnet, dass** das Steuermittel so ausgelegt ist, dass es jeden komprimierten Impuls überwacht und über das jeweilige Verzögerungselement (211, 221) eine geeignete Verzögerung anwendet, so dass die Frequenz jedes Lasers (212, 222) je nach Bedarf erhöht oder verringert und so die Position der einzelnen Impulse in dem multiplexierten Impulsstrom gesteuert werden kann.

2. System nach Anspruch 1, bei dem das Steuermittel (240) jedem modulierten Impuls einen Zeitschlitz zuordnet und so für die Synchronisation für das Multiplexieren der modulierten Impulse auf die optische Faser sorgt.

3. System nach Anspruch 1, bei dem das Steuermittel (240) zum asynchronen Multiplexieren der modulierten Impulse auf die optische Faser ein Kollisionsprotokoll benutzt.

4. System nach einem der vorhergehenden Ansprüche, bei dem die impulserzeugende Vorrichtung (212, 222) einen Kurzpulslaser umfasst.

5. System nach Anspruch 4, bei dem der Kurzpulslaser (212, 222) einen modengekoppelten Faserlaser und ein starkes Dispersionselement oder einen modengekoppelten Halbleiterlaser und ein Dispersionselement umfasst.

6. System nach einem der Ansprüche 1 bis 3, bei dem die impulserzeugende Vorrichtung einen gepulsten Laser und einen Dekompressor umfasst.

7. System nach Anspruch 6, bei dem die Moduliermittel (214, 224) und das Impulskompressionselement (215, 225) Folgendes umfassen: ein räumlich dispergierendes Element (420) zum Erzeugen mehrerer räumlich verteilter Ausgänge des Eingangslaserimpulses, ein Moduliermittel (430) zum Modulieren von Digitaldaten auf die einzelnen Ausgänge und ein umgekehrt räumlich dispergierendes Element (440) zum Rekombinieren der datenmodulierten Ausgänge.

8. System nach einem der vorhergehenden Ansprüche, bei dem die Moduliermittel (214, 224) elektrooptische Mach-Zehnder-Modulatoren, Elektroabsorptionsmodulatoren oder modulierte optische Siliziumverstärker umfassen.

9. Verfahren für die Datenkompression in einem optischen System, wobei das Verfahren Folgendes umfasst: Erzeugen von Impulsen aus mindestens zwei impulserzeugenden Vorrichtungen (212, 222), wobei zu jeder impulserzeugenden Vorrichtung ein Verzögerungselement (211, 221), Moduliermittel (214, 224) und ein Impulskompressionselement (215, 225) gehören, Modulieren von Digitaldaten auf die einzelnen Impulse im jeweiligen Moduliermittel, Komprimieren des modulierten Impulses in dem jeweiligen Impulskompressionselement und Einkoppeln der datenmodulierten Impulse auf eine optische Faser unter Steuerung des Steuermittels (240), **dadurch gekennzeichnet, dass** das Verfahren des Weiteren Folgendes umfasst: Überwachen der einzelnen komprimierten Impulse und Anwenden einer geeigneten Verzögerung auf jeden Impuls über das jeweilige Verzögerungselement (211, 221), so dass die Frequenz jedes Lasers (212, 222) je nach Bedarf erhöht oder verringert und so die Position der einzelnen Impulse in dem multiplexierten Impulsstrom gesteuert werden kann.

10. Verfahren nach Anspruch 9, bei dem es sich bei dem Impuls um einen Chirpimpuls handelt.

## Revendications

1. Système optique comprenant un dispositif de compression de données (200), étant entendu que le dispositif comprend au moins deux dispositifs générateurs d'impulsions (212, 222) ; un élément à retard (211, 221), des moyens de modulation (214, 224) et un élément de compression d'impulsions (215, 225) associés à chaque dispositif générateur d'impulsions, et un moyen de régulation (240), chaque impulsion modulée,
comprimée, étant multiplexée (230) sur une fibre optique, et **caractérisé en ce que** le moyen de régulation est adapté pour surveiller chaque impulsion comprimée et pour appliquer un retard approprié au moyen de l'élément à retard (211, 221) correspondant de telle sorte que la fréquence de chaque laser (212, 222) soit augmentée ou diminuée autant que nécessaire pour réguler la position de chaque impulsion dans le train d'impulsions multiplexées.

2. Système selon la revendication 1, dans lequel le moyen de régulation (240) attribue un créneau temporel à chaque impulsion modulée afin d'assurer une synchronisation pour multiplexer les impulsions modulées sur la fibre optique.

3. Système selon la revendication 1, dans lequel le moyen de régulation (240) exploite un protocole de collision pour multiplexer les impulsions modulées de manière asynchrone sur la fibre optique.

4. Système selon l'une quelconque des revendications précédentes, dans lequel le dispositif générateur d'impulsions (212, 222) est constitué par un laser à impulsions ultracourtes.

5. Système selon la revendication 4, dans lequel le laser à impulsions ultracourtes (212, 222) est constitué soit d'un laser à fibre à modes synchronisés et d'un élément très dispersif, soit d'un laser à semi-conducteurs à modes synchronisés et d'un élément dispersif.

6. Système selon l'une quelconque des revendications 1 à 3, dans lequel le dispositif générateur d'impulsions est constitué d'un laser pulsé et d'un décomprimeur.

7. Système selon la revendication 6, dans lequel le moyen de modulation (214, 224) et l'élément de compression d'impulsions (215, 225) comprennent un élément spatialement dispersif (420) pour produire une pluralité de sorties réparties spatialement à partir de l'impulsion laser d'entrée, un moyen de modulation (430) pour moduler des données numériques sur chaque sortie et un élément spatialement dispersif inversé (440) pour recombiner les sorties modulées de données.

8. Système selon l'une quelconque des revendications précédentes, dans lequel le moyen de modulation (214, 224) est constitué soit par des modulateurs électro-optiques de type Mach-Zehnder, soit par des modulateurs à électro-absorption, soit par des amplificateurs optiques modulés au silicium.

9. Procédé de compression de données dans un système optique, le procédé consistant à produire des impulsions à partir d'au moins deux dispositifs générateurs d'impulsions (212, 222), chaque dispositif générateur d'impulsions étant associé à un élément à retard (211, 221), à un moyen de modulation (214, 224) et à un élément de compression d'impulsions (215, 225), à moduler des données numériques sur chaque impulsion dans le moyen de modulation correspondant, à comprimer l'impulsion modulée dans l'élément de compression d'impulsions correspondant, et à coupler les impulsions de données modulées sur une fibre optique sous le contrôle du moyen de régulation (240), **caractérisé en ce que** le procédé consiste par ailleurs à surveiller chaque impulsion comprimée et à appliquer un retard approprié à chaque impulsion provenant de l'élément à retard (211, 221) correspondant de telle sorte que la fréquence de chaque laser (212, 222) soit augmentée ou diminuée autant que nécessaire pour réguler la position de chaque impulsion dans le train d'impulsions multiplexées.

10. Procédé selon la revendication 9, dans lequel l'impulsion est une impulsion ultracourte.
